# EUROPEAN PATENT APPLICATION

(11) **EP 1 236 687 A2**
(43) Date of publication of application: **04.09.2002**
(21) Application number: 02251397.2
(22) Date of filing: 28.02.2002
(51) Int. Cl.: C02F 3/00, C02F 3/12, C02F 3/30

(54) **Activated sludge treatment**

(30) Priority: 01.03.2001 GB 0105059
(71) Applicant: SEVERN TRENT WATER LIMITED, Birmingham, B26 3PU (GB)
(72) Inventor: Bingley, Marc Ian, Leamington Spa, Warwickshire CV32 7JB (GB)
(74) Representative: Makovski, Priscilla Mary

(57) **Abstract**

A fully mixed reactor (1) for activated sludge treatment of sewage as a mixed liquor which reactor (1) includes at least one aerator (6) operative intermittently to raise the dissolved oxygen level of the liquor and a control system (7) which is arranged to operate the aerator (6) to provide an operative phase including a predetermined aerobic time period after a first dissolved oxygen target level is reached, and an inoperative phase including a predetermined anoxic time period after a second, lower, dissolved oxygen target level is reached, is provided.

## Description

This invention relates to activated sludge treatment of sewage.

There are various different types of apparatus in use for treating sewage by using activated sludge, which contains biological organisms in suspension to oxidise and stabilize the settled sewage, thus enabling the water to be removed. One type of apparatus is an oxidation ditch, which is often used for relatively small quantities of sewage (up to a population equivalent of about 10,000). An oxidation ditch comprises an oval 'race-track', round which the sewage mixed with activated sludge (the mixed liquor) is circulated continuously and aerated by a rotor. As it goes round, the liquor is subjected to different processes, including aerobic and anoxic zones, and so shows gradients in dissolved oxygen, which ensures efficient treatment. The oxidation ditch normally includes a separate settlement zone for sludge. It is necessary for the liquor to be pumped round at a sufficiently slow speed for the various processes to operate properly, but at a sufficiently fast speed to ensure that the organisms remain in suspension. These two speeds are frequently impossible to reconcile.

Oxidation ditches therefore often have aerators operated on a timed basis, to provide the necessary aerobic and anoxic zones as a function of time rather than location within the 'race-track'. The ditch then becomes in effect a fully mixed reactor. The aerators are normally operated on a simple timed basis (a fixed ratio of on time to off time), but this does not take account of variations in load, i.e. the biological oxygen demand of the sewage coming in for treatment. The biological oxygen demand varies with the amount and condition of the sewage. It is a measure of the amount of oxygen needed by the bacteria to process the organic and inorganic food in the sewage.

The overall purpose of the oxidation ditch is to remove ammonia from the sewage and to reduce the level of the biochemical oxygen demand. Ammonia is removed from the sewage in an aerobic zone by nitrification. During the anoxic period, if the dissolved oxygen falls below a certain level, the biological oxygen demand can be satisfied by the nitrates and nitrites formed by the oxidisation of ammonia during the aerobic phase. However if the system remains anoxic for too long, the bacteria die. On the other hand it is expensive to have the aerator operating continuously.

According to a first aspect of the present invention, in a fully mixed reactor providing activated sludge treatment of sewage as a mixed liquor and including at least one aerator operative intermittently to raise the dissolved oxygen level of the liquor, a control system is arranged to operate the aerator to provide an operative phase including a predetermined aerobic time period after a first dissolved oxygen target level is reached, and an inoperative phase including a predetermined anoxic time period after a second, lower, dissolved oxygen target level is reached.

As the control system operates the aerator in response to dissolved oxygen levels rather than on a simple timed basis, it can take account of variations in the load, and thus treat the sewage more effectively and at a lower cost without the risk of destroying any bacteria in the sewage.

The first dissolved oxygen target level is generally a minimum oxygen level at which a micro organism in the reactor can oxidise ammonia efficiently. The second dissolved oxygen target level is generally a maximum dissolved oxygen level at which a micro organism will use oxidised ammonia to satisfy biological oxygen demand.

The operative and inoperative phases are preferably consecutive. Thus the operative phase is preferably started by the control system at the end of the predetermined anoxic time period and the inoperative phase is preferably started by the control system at the end of the predetermined aerobic time period.

Preferably the operative phase comprises an initial operative variable time period and then the predetermined aerobic time period. The inoperative phase may comprise an initial inoperative variable time period and then the predetermined anoxic time period.

The initial operative variable time period is preferably until the first target level is reached. The initial inoperative variable time period is preferably until the second target level is reached.

Thus, the aerator will be operative following the end of the predetermined anoxic time period, to take the dissolved oxygen level up to the first target level, and will then continue to operate for the predetermined aerobic time period to raise the dissolved oxygen level further, up to a given set point. The control system is preferably arranged to maintain the dissolved oxygen level at the given set point by varying the output of the aerator. The set point is preferably chosen to be sufficiently higher than the first target level that any inertia or slowness in response by the aerator to the control system does not result in the loss of aerobic conditions but is not so high that the reactor becomes exceptionally expensive to run. Any inertia or slowness in response by the aerator is commonly due to the fact that often an aerator is located at a distance (sometimes around 100m) from the reactor and that an aerator is based on a large motor which takes some time to reach an operating speed.

At the end of the predetermined aerobic time period the control system switches the aerator off, initiating the inoperative phase. This allows the dissolved oxygen level to fall to the second lower target level, when the predetermined anoxic time period starts, during which the dissolved oxygen level falls further. At the end of the predetermined anoxic time period the control system starts the operative phase again by switching the aerator on. Thus, the control system only operates the aerator when necessary, making the treatment process more efficient, and minimising the energy needed to operate the aerator.

The control system preferably includes at least one override condition, to assist in taking account of the variations in load. Thus, in an aerobic override condition, if the initial variable period of the operative phase is greater than a chosen multiple of the predetermined aerobic time period, the control system starts the inoperative phase. This condition may occur if the load is great (a large biological oxygen demand) so that the aerator has difficulty in raising the dissolved oxygen level to the first target level. As prolonged operation at intermediate dissolved oxygen levels, that is, between the target levels can give rise to problems, it is preferable to override the operative phase, and start the inoperative phase.

Conversely, in an anoxic override condition, if the initial variable period of the inoperative phase is greater than a chosen multiple of the predetermined anoxic time period, the control system starts the operative phase. This condition may occur if the load is weak (a small biological oxygen demand) so that the dissolved oxygen level drops slowly. Again, to avoid prolonged operation at the intermediate dissolved oxygen levels, it is preferable to override the inoperative phase and start the operative phase.

The predetermined time periods will be chosen according to the characteristics of each reactor, but the aerobic time period might be from 15 to 120 minutes, and typically of the order of 20 minutes, while the anoxic time period might be from 0 to 60 minutes, and typically of the order of 5 minutes.

Similarly, the target levels may also be chosen according to the reactor characteristics, but typically the first target level would be from 0.5 to 2.0 mg/L, while the second target level would be from 0.1 to 1.5 mg/L. The given set point is preferably higher than the first target level and may be from 0.5 to 5.0 mg/L.

The multiples determining the override conditions will also be chosen to suit the particular reactor, but will be greater than 1, and in the range of from 2 to 10, but typically from 3 to 6.

According to a second aspect of the present invention, a method of controlling an aerator for a fully mixed reactor providing activated sludge treatment of sewage as a mixed liquor comprises operating the aerator in an operative phase including a predetermined aerobic time period after a first dissolved oxygen target level is reached, and in an inoperative phase including a predetermined anoxic time period after a second, lower, dissolved oxygen target level is reached.

The output of the aerator is preferably varied during the operative phase to maintain the dissolved oxygen level at or around a given set point which is higher than the first target level.

Operating the aerator according to the method, in response to dissolved oxygen levels, means that the sewage is treated efficiently even with variations in the load.

The operative phase preferably comprises an initial variable time period and then the predetermined aerobic time period. The inoperative phase may comprise an initial variable time period followed by the predetermined anoxic time period.

The method may also include override steps, as described above in relation to the first aspect of the invention.

An embodiment showing both aspects of the invention is illustrated by way of example only in the accompanying drawings, in which:
**Figure 1** is a diagrammatic illustration of a plan view of a fully mixed reactor for activated sludge treatment of sewage; and
**Figure 2** is a graph plotting dissolved oxygen levels against time during operation of the reactor of Figure 1 according to the invention.

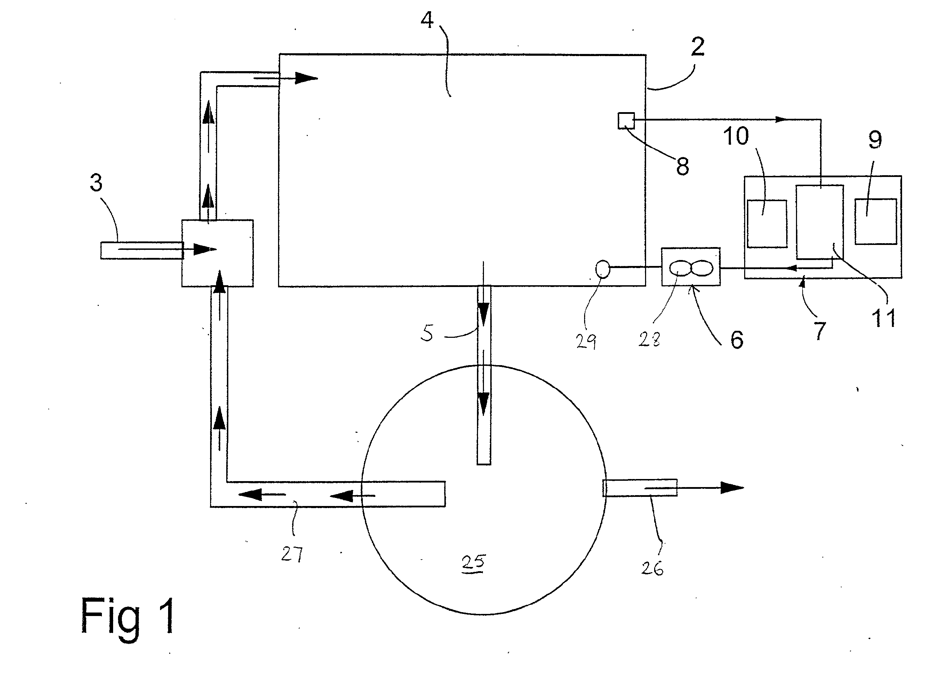

Figure 1 shows, in diagrammatic form, a fully mixed reactor 1 for activated sludge treatment of sewage. The reactor comprises a cuboid tank 2 containing activated sludge, into which settled sewage enters through an inlet 3. The activated sludge mixes with the settled sewage to form a mixed liquor 4. The activated sludge contains biological organisms in suspension, which oxidize and stabilize the settled sewage. This separates into sludge and a liquid effluent (more or less purified water) which is removed through an outlet 5 and clarified in a clarifier 25. The clarified water is then removed via outlet 26, whilst any return activated sludge is returned to the inlet 3 through a pipe 27. The biological organisms require a certain level of dissolved oxygen in the mixed liquor to oxidize the sewage, so that the reactor 1 must be operated with an aerobic phase, alternating with an anoxic phase to reduce the nitrification which can also occur.

The aerobic phase is achieved by turning on an aerator 6, comprising an electrically-operated fan 28 outside the tank 2 which blows air into the base of the tank 2 through a disc 29. The anoxic phase is achieved by keeping the aerator 6 turned off. The aerator 6 is operated by an electronic control system 7 in response to the dissolved oxygen content of the liquor 4 measured by a sensor 8, and for predetermined time periods.

The control system 7 includes an electronic memory 9 for storing information relating to the predetermined time periods and other process information, a timer 10 for measuring the time periods, and a processor unit 11 for processing the input from the time 10, the memory 9 and the sensor 8, and delivering an output to operate the aerator 6. The information in the memory 9 is input by an operator according to the particular reactor.

The control system 7 switches the aerator 6 on for an operative phase, and then off for an inoperative phase.

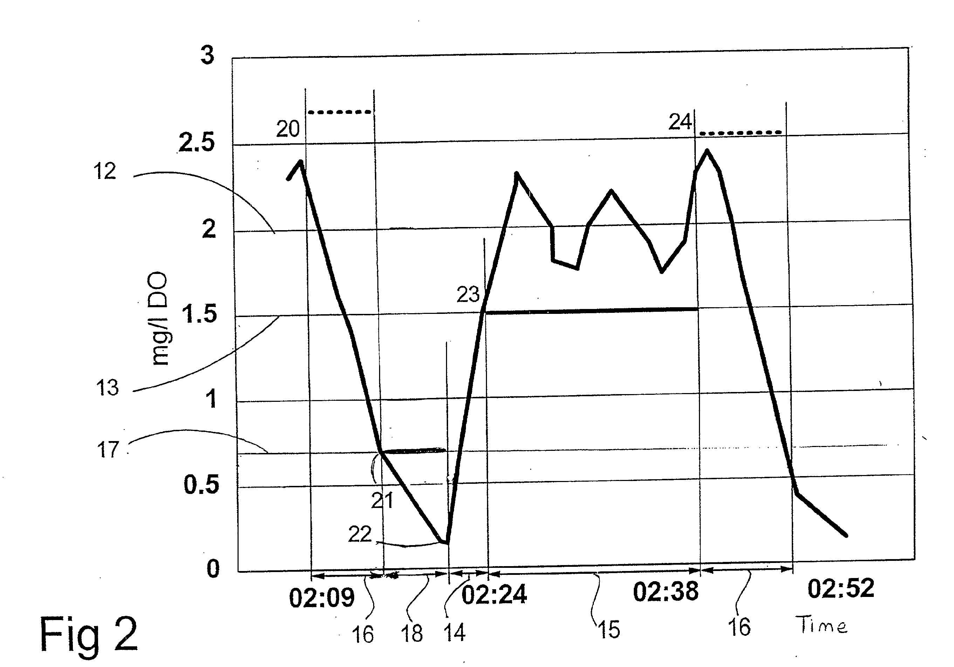

In the operative phase the aerator 6 increases the dissolved oxygen level in the liquor 4. The reactor 1 has a dissolved oxygen set point 12 (see Figure 2), at which there is sufficient oxygen for the organisms to operate efficiently. The set point may vary from reactor to reactor, according to the tank size and the type of sewage being treated, i.e. the average biological oxygen demand of the sewage. The set point 12 will normally be between 0.5 and 5.0 mg/L, and is input into the memory 9 by the operator.

The memory 9 also holds a first target level 13 of dissolved oxygen, which is less than the set point 12, and again will be chosen according to the reactor characteristics. The first target level 13 will be in the range 0.5 to 2.0 mg/L, and is input by the operator.

In the operative phase the control system 7 switches on the aerator 6 for an initial variable period 14 until the first target level 13 is reached, and keeps it switched on for a predetermined aerobic time period 15 to provide the aerobic phase. During the aerobic phase the control system 7 maintains the dissolved oxygen level above the first target level 13 and at or around the set point 12 by varying the output of the aerator 6 using a PID (Proportionate Integral Derivative) routine which responds to the rate and/or amplitude of change of the dissolved oxygen level. At the end of the predetermined period the control system 7 switches off the aerator 6, starting the inoperative phase.

Switching off the aerator 6 causes the dissolved oxygen level to drop as the organisms use the oxygen. The inoperative phase has an initial variable period 16, lasting until a second lower dissolved oxygen target level 17 is reached. The second target level 17 is also held in the memory 9, and is chosen according to reactor characteristics. It will be in the range 0.1 to 1.5 mg/L, and is input by the operator. The inoperative phase concludes with a predetermined anoxic time period 18, after which the control system 7 switches the aerator 6 on again for the next operative phase.

The predetermined time periods 15, 18 are also held in the memory 9, and are chosen according to the reactor. The aerobic period 15 will normally be in the range 15 to 120 minutes, while the anoxic period 18 will normally be between 0 and 60 minutes.

The control system is also arranged to override normal operation of the aerator 6 if override conditions occur. These can occur in either the operative or the inoperative phase, where the initial variable period, in which the dissolved oxygen level is between the first and second targets, is too long. Prolonged operation at intermediate level between the first and second target levels 13, 17 can cause problems in the treatment process.

The initial variable period 14 of the operative phase may become too long if the load is too great, so that it has a biological oxygen demand that is too large to be supplied by the aerator 6. The control system 7 times the length of the initial variable period 14 using the timer 10, and if it exceeds a predetermined multiple of the predetermined aerobic time period 15, it overrides the normal operative phase, and turns the aerator 6 off, to initiate the inoperative phase. The multiple is normally in the range 2 to 10, and is chosen by the operator.

Conversely the initial variable period 16 of the inoperative phase may became too long if the load is weak, so that its biological oxygen demand is low, and the dissolved oxygen level drops very slowly. Again, the timer 10 times the initial variable period 16 and if it exceeds a predetermined multiple of the predetermined anoxic time period 18, the control system 7 overrides the normal inoperative phase, and turns the aerator 6 on, to initiate the operative phase. The multiple is normally in the range 2 to 10, and is chosen by the operator.

The graph of Figure 2 shows the dissolved oxygen level plotted against time in hours of a reactor operating in accordance with the invention.

In Figure 2 the dissolved oxygen set point 12 is 2 mg/L, while the first target level 13 is 1.5 mg/L, and the second target level 17 is 0.7 mg/L. the predetermined aerobic time period 15 is 20 minutes, with an override multiple of 5. The predetermined anoxic time period 18 is 5 minutes, with an override multiple of 4.

The point 20 on the graph represents the start of the inoperative phase, where the aerator 6 is switched off. The initial variable period 16 of the inoperative phase lasts until point 21, when the second target level 17 is reached. The predetermined anoxic time period 18 of 5 minutes then starts, during which the dissolved oxygen level drops further. Point 22 shows the end of the predetermined anoxic period 18, where the control system 8 switches the aerator 6 back on to start the operative phase.

The initial variable period 14 lasts until point 23, when the first target level 13 is reached. The operative phase continues with the predetermined aerobic time period 15 to raise the dissolved oxygen level further, up to set point 12. The operative phase ends at point 24, when the inoperative phase starts again.

It will be appreciated that, in modifications (not shown), the aerator 6 may be of a different type, where a rotor or venturi mixer is mounted within the tank 2. These aerators will be operated in a similar way to that described with reference to Figure 1.

## Claims

1. A fully mixed reactor (1) for providing activated sludge treatment of sewage as a mixed liquor (4) which reactor (1) includes at least one aerator (6) operative intermittently to raise the dissolved oxygen level of the liquor (4) and a control system (7) which is arranged to operate the aerator (6) to provide an operative phase including a predetermined aerobic time period (15) after a first dissolved oxygen target level (13) is reached, and an inoperative phase including a predetermined anoxic time period (18) after a second, lower, dissolved oxygen target level (17) is reached.

2. A reactor as claimed in claim 1 wherein in the operative phase the control system (7) is arranged to vary the output of the aerator (6) during the predetermined aerobic time period (15) so as to maintain the dissolved oxygen level at a given set point (12).

3. A reactor as claimed in claim 2 wherein the given set point (12) is higher than the first target level, preferably from 0.5 to 5.0 mg/L.

4. A reactor as claimed in any preceding claim wherein the operative phase comprises an initial operative variable time period (14) and then the predetermined aerobic time period (15) and the inoperative phase comprises an initial inoperative variable time period (16) and then the predetermined anoxic time period (18).

5. A reactor as claimed in claim 4 wherein the initial operative variable time period (14) is until the first target level (13) is reached and the initial inoperative variable time period (16) is until the second target level (17) is reached.

6. A reactor as claimed in claim 4 or claim 5 wherein the control system (7) includes at least one override condition which is an aerobic override condition such that if the initial operative variable period (14) is greater than a chosen multiple of the predetermined aerobic time period (15), the control system (7) starts the inoperative phase.

7. A reactor as claimed in any of claims 4 to 6 wherein the control system (7) includes at least one override condition which is an anoxic override condition such that if the initial inoperative variable period (16) is greater than a chosen multiple of the predetermined anoxic time period (18), the control system (7) starts the operative phase.

8. A reactor as claimed in claim 6 or claim 7 wherein the multiple is from 2 to 10, preferably from 3 to 6.

9. A reactor as claimed in any preceding claim wherein the predetermined aerobic time period (15) is from 15 to 120 minutes, preferably about 20 minutes, and the predetermined anoxic time period (18) is from 0 to 60 minutes, preferably about 5 minutes.

10. A method of controlling an aerator (6) for a fully mixed reactor (1) providing activated sludge treatment of sewage as a mixed liquor (4) which method includes operating the aerator (6) in an operative phase including a predetermined aerobic time period (15) after a first dissolved oxygen target level (13) is reached, and in an inoperative phase including a predetermined anoxic time period (18) after a second, lower, dissolved oxygen target level (17) is reached.

11. A method as claimed in claim 10 wherein the output of the aerator (6) is varied during the operative phase to maintain the dissolved oxygen level at or around a given set point (12) which is higher than the first target level (13).

12. A method as claimed in claim 10 or claim 11 wherein the operative phase comprises an initial operative variable time period (14) and then the predetermined aerobic time period (15) and the inoperative phase comprises an initial inoperative variable time period (16) followed by the predetermined anoxic time period (18).

13. A method as claimed in claim 12 wherein the initial operative variable time period (14) is until the first target level (13) is reached and the initial inoperative variable time period (16) is until the second target level (17) is reached.

14. A method as claimed in claim 12 or claim 13 which includes overriding the operative phase to start the inoperative phase if the initial operative variable period (14) is greater than a chosen multiple of the predetermined aerobic time period (15).

15. A method as claimed in any of claims 12 to 14 which includes overriding the inoperative phase to start the operative phase if the initial inoperative variable period (16) of the inoperative phase is greater than a chosen multiple of the predetermined anoxic time period (18).

16. A method as claimed in claim 14 or claim 15 wherein the multiple is from 2 to 10, preferably from 3 to 6.
